# EUROPEAN PATENT APPLICATION

(11) **EP 4 382 409 A1**
(43) Date of publication of application: **12.06.2024**
(21) Application number: 23210377.0
(22) Date of filing: 16.11.2023
(51) Int. Cl.: B63H 5/14, B63H 20/00, B63H 21/17, H02K 5/12

(54) **MARINE PROPULSION DEVICE**

(30) Priority: 09.12.2022 JP 2022197116
(71) Applicant: Yamaha Hatsudoki Kabushiki Kaisha, Iwata-shi, Shizuoka-ken 438-8501 (JP)
(72) Inventor: Kan, Yoshitaka, Iwata-shi, Shizuoka-ken, 438-8501 (JP)
(74) Representative: Grünecker Patent- und Rechtsanwälte PartG mbB

(57) **Abstract**

A marine propulsion device (100) includes an entry suppressor (60) provided circumferentially between an inner peripheral surface (40a) of a duct (40) and an outer peripheral surface (51a) of a rim (51) in a radial direction of a rotor (54) and configured to reduce or prevent entry of foreign matter into a gap (G) between the inner peripheral surface (40a) of the duct (40) and the outer peripheral surface (51a) of the rim (51). The entry suppressor (60) has a thickness (t) larger than a minimum width (W1) of the gap (G) and smaller than a maximum width (W2) of the gap (G) in the radial direction of the rotor (54).

## Description

The present invention relates to a marine propulsion device.

A marine propulsion device including an entry suppressor that reduces or prevents entry of foreign matter into a gap between the inner peripheral surface of a duct and the outer peripheral surface of a rim is known in general. Such a marine propulsion device is disclosed in JP 2013 - 100 014 A, for example.

JP 2013 - 100 014 A discloses a marine propulsion unit (marine propulsion device) including a duct including a stator, and a propeller including a rim that includes a rotor located radially inwardly of the stator so as to face the stator, and blades provided radially inwardly of the rim. The propeller including the rim and the blades rotates with respect to the duct. Furthermore, JP 2013 - 100 014 A discloses a marine propulsion unit further including a seal (entry suppressor) or a dust-proof ring (entry suppressor) that reduces or prevents entry of foreign matter into a gap between the inner peripheral surface of a duct and the outer peripheral surface of a rim, in addition to the structures described above.

In the marine propulsion unit including the seal disclosed in JP 2013 - 100 014 A, the annular seal and an annular securing ring that secures the seal to the rim and the duct are provided in the vicinity of the gap between the inner peripheral surface of the duct and the outer peripheral surface of the rim. The seal and the securing ring seal the gap between the inner peripheral surface of the duct and the outer peripheral surface of the rim. The seal contacts the rim over the entire circumference.

In the marine propulsion unit including the dust-proof ring disclosed in JP 2013 - 100 014 A, the annular dust-proof ring is located in the vicinity of the gap between the inner peripheral surface of the duct and the outer peripheral surface of the rim. The dust-proof ring does not contact the rim over the entire circumference. The dust-proof ring includes slits each having a width smaller than the gap between the inner peripheral surface of the duct and the outer peripheral surface of the rim to prevent entry of foreign matter larger than the gap between the inner peripheral surface of the duct and the outer peripheral surface of the rim into the gap. The slits are provided over the entire circumference of the dust-proof ring.

However, in the marine propulsion unit (marine propulsion device) including the seal (entry suppressor) disclosed in JP 2013 - 100 014 A, the seal contacts the rim over the entire circumference, and thus a frictional force generated between the seal and the rim becomes relatively large when the rim rotates. In such a case, the amount of power consumed to rotate the rim increases and the maximum output of a motor including the stator and the rotor decreases as the frictional force increases. On the other hand, in the marine propulsion unit (marine propulsion device) including the dust-proof ring (entry suppressor) disclosed in JP 2013 - 100 014 A, the dust-proof ring does not contact the rim over the entire circumference, and thus a frictional force is not generated between the seal and the rim when the rim rotates.

In the marine propulsion unit including the dust-proof ring disclosed in JP 2013 - 100 014 A, it is necessary to provide the dust-proof ring in which the slits each having a width smaller than the gap between the inner peripheral surface of the duct and the outer peripheral surface of the rim are provided over the entire circumference. That is, it is necessary to provide the dust-proof ring having a relatively complex structure in the marine propulsion unit. Therefore, a marine propulsion device is desired that reduces or prevents entry of foreign matter into a gap between the inner peripheral surface of a duct and the outer peripheral surface of a rim without providing an entry suppressor having a relatively complex structure, while reducing or preventing an increase in the amount of power consumed to rotate the rim and a decrease in the maximum output of a motor.

It is an object of the present invention to provide a marine propulsion device that reduces or prevents entry of foreign matter into a gap between the inner peripheral surface of a duct and the outer peripheral surface of a rim without providing an entry suppressor having a relatively complex structure, while reducing or preventing an increase in the amount of power consumed to rotate the rim and a decrease in the maximum output of a motor. According to the present invention, said object is solved by a marine propulsion device having the features of independent claim 1. Preferred embodiments are laid down in the dependent claims.

A marine propulsion device according to a preferred embodiment includes a duct including a stator, a propeller including a rim including a rotor provided radially inwardly of the stator so as to face the stator, and blades provided radially inwardly of the rim, and an entry suppressor made of an expansible and shrinkable material, provided circumferentially between an inner peripheral surface of the duct and an outer peripheral surface of the rim in a radial direction of the rotor, and configured to reduce or prevent entry of foreign matter including gravel into a gap between the inner peripheral surface of the duct and the outer peripheral surface of the rim in the radial direction. The entry suppressor made of the expansible and shrinkable material has a thickness larger than a minimum width of the gap and smaller than a maximum width of the gap in the radial direction. The gap between the inner peripheral surface of the duct and the outer peripheral surface of the rim is generally non-uniform in the circumferential direction of the rotor due to manufacturing errors (tolerances) of the duct and the rim.

In a marine propulsion device according to a preferred embodiment, in the radial direction, the thickness of the entry suppressor made of the expansible and shrinkable material is larger than the minimum width of the gap and smaller than the maximum width of the gap. Accordingly, in a portion of the gap having the minimum width, the entry suppressor is shrunk to a thickness that is substantially the same as the minimum width of the gap, and contacts the inner peripheral surface of the duct and the outer peripheral surface of the rim. Furthermore, in the vicinity of a portion of the gap having the maximum width, the entry suppressor does not contact at least one of the inner peripheral surface of the duct or the outer peripheral surface of the rim. Thus, the entry suppressor contacts the duct and the rim only partially in the circumferential direction, and thus a frictional force generated between the entry suppressor and both the duct and the rim when the rim rotates is reduced as compared with a case in which the entry suppressor contacts the duct and the rim over the entire circumference. Furthermore, the entry suppressor in the marine propulsion device according to the preferred embodiment having the thickness larger than the minimum width of the gap and smaller than the maximum width of the gap and made of the expansible and shrinkable material has a simple structure as compared with an entry suppressor in a conventional marine propulsion device in which slits each having a width smaller than a gap between the inner peripheral surface of a duct and the outer peripheral surface of a rim are provided over the entire circumference. Consequently, entry of foreign matter into the gap between the inner peripheral surface of the duct and the outer peripheral surface of the rim is reduced or prevented without providing an entry suppressor having a relatively complex structure, while an increase in the amount of power consumed to rotate the rim and a decrease in the maximum output of a motor are reduced or prevented.

In a marine propulsion device according to a preferred embodiment, in the radial direction, a difference between the thickness of the entry suppressor made of the expansible and shrinkable material and the maximum width of the gap is preferably smaller than the minimum width of the gap. Accordingly, the maximum particle size of foreign matter entering the gap is smaller than the minimum width of the gap, and thus catching in the gap of the foreign matter entering the gap is reduced or prevented. Thus, wear of the inner peripheral surface of the duct and the outer peripheral surface of the rim caused by the foreign matter entering the gap is reduced or prevented.

In a marine propulsion device according to a preferred embodiment, each of the rotor and the stator is preferably covered with a resin, and the entry suppressor is preferably provided between the outer peripheral surface of the rim made of the resin covering the rotor and the inner peripheral surface of the duct made of the resin covering the stator in the radial direction. Accordingly, entry of foreign matter into the gap is reduced or prevented by the entry suppressor such that wear of the inner peripheral surface of the duct and the outer peripheral surface of the rim, both of which are made of the resin that wears more easily than metal, is effectively reduced or prevented.

In such a case, a width in the radial direction between the outer peripheral surface of the rim made of the resin covering the rotor and the inner peripheral surface of the duct made of the resin covering the stator is preferably non-uniform in a circumferential direction of the rotor. Accordingly, assuming that the thickness of the entry suppressor in the radial direction is constant, a structure in which the thickness of the entry suppressor is larger than the minimum width of the gap and smaller than the maximum width of the gap in the radial direction is reliably achieved.

In a marine propulsion device according to a preferred embodiment, the entry suppressor is preferably made of an expansible and shrinkable foamed rubber. Accordingly, the entry suppressor is easily shrunk to be smaller than the minimum width of the gap.

In such a case, the entry suppressor made of the foamed rubber is preferably configured to be attached to either the inner peripheral surface of the duct or the outer peripheral surface of the rim in the gap, and the marine propulsion device preferably further includes a wear suppressing layer configured to be provided on either the outer peripheral surface of the rim or the inner peripheral surface of the duct configured to face the entry suppressor made of the foamed rubber in the gap and configured to reduce or prevent wear caused by the foreign matter adhering to the foamed rubber. Accordingly, the entry suppressor is attached to either the inner peripheral surface of the duct or the outer peripheral surface of the rim in the gap such that the entry suppressor is easily provided in the gap between the inner peripheral surface of the duct and the outer peripheral surface of the rim. Furthermore, when foreign matter adheres to the foamed rubber of which the entry suppressor is made, the wear suppressing layer reduces or prevents wear of either the outer peripheral surface of the rim or the inner peripheral surface of the duct facing the entry suppressor made of the foamed rubber, caused by the foreign matter.

In a marine propulsion device according to a preferred embodiment, the entry suppressor is preferably configured to be attached to the outer peripheral surface of the rim in the gap. Attachment work to attach the circumferentially provided entry suppressor to the outer peripheral surface of the rim from the radial outside is easier than attachment work to attach the circumferentially provided entry suppressor to the inner peripheral surface of the duct from the radial inside. Therefore, with the structure described above, as compared with a case in which the entry suppressor is attached to the inner peripheral surface of the duct in the gap, the entry suppressor is easily provided in the gap between the inner peripheral surface of the duct and the outer peripheral surface of the rim. Furthermore, the entry suppressor is placed on the upper side in the gap on the lower side between the inner peripheral surface of the duct and the outer peripheral surface of the rim, and thus catching in the entry suppressor of foreign matter entering the gap on the lower side between the inner peripheral surface of the duct and the outer peripheral surface of the rim is reduced or prevented when a state in which the duct and the rim are submerged in water has changed to a state in which the duct and the rim are not submerged in water.

In a marine propulsion device according to a preferred embodiment, the entry suppressor is preferably made of a non-magnetic material. Accordingly, the magnetic influence of the entry suppressor exercised on the rotor when the rim including the rotor rotates is reduced or prevented. That is, a decrease in the performance of the motor including the stator of the duct and the rotor of the rim is reduced or prevented.

In a marine propulsion device according to a preferred embodiment, the entry suppressor is preferably configured to be attached to either the inner peripheral surface of the duct or the outer peripheral surface of the rim in the gap. Accordingly, the entry suppressor is easily provided in the gap between the inner peripheral surface of the duct and the outer peripheral surface of the rim.

In such a case, the entry suppressor preferably has a length in an axial direction of the rotor larger than the thickness of the entry suppressor in the radial direction. Accordingly, the length of the entry suppressor in the axial direction of the rotor is relatively large, and thus the attachment area of the entry suppressor to the inner peripheral surface of the duct or the outer peripheral surface of the rim becomes relatively large. Thus, the entry suppressor is relatively firmly attached to the inner peripheral surface of the duct or the outer peripheral surface of the rim.

In a marine propulsion device according to a preferred embodiment, the gap is preferably configured to extend in an axial direction of the rotor, and the entry suppressor is preferably provided separately at each of a first end and a second end in the axial direction of the gap configured to extend in the axial direction. Accordingly, as compared with a case in which the entry suppressor is provided in a portion of the gap other than the first end and the second end in the axial direction, entry of foreign matter into the gap is effectively reduced or prevented. Furthermore, as compared with a case in which the entry suppressor is provided in the portion of the gap other than the first end and the second end in the axial direction in addition to the first end and the second end of the gap in the axial direction, an area in which the entry suppressor contacts the rim is reduced such that a frictional force generated between the entry suppressor and the rim when the rim rotates is reduced.

In such a case, one end of the rotor in the axial direction and one end of the stator in the axial direction are preferably configured to be deviated from each other in the axial direction, and the entry suppressor provided at the first end of the gap in the axial direction is preferably provided at a position corresponding, in the axial direction, to the one end of the rotor in the axial direction and not corresponding, in the axial direction, to the one end of the stator in the axial direction. Accordingly, even when one end of the rotor in the axial direction and one end of the stator in the axial direction are deviated from each other in the axial direction, the entry suppressor is provided at the first end in the axial direction of the gap extending in the axial direction.

The above and other elements, features, steps, characteristics and advantages of preferred embodiments will become more apparent from the following detailed description of the preferred embodiments with reference to the attached drawings.

### BRIEF DESCRIPTION OF THE DRAWINGS

FIG. 1 is a side view of a marine propulsion device according to a preferred embodiment.
FIG. 2 is a perspective view of a duct and a rim of a marine propulsion device according to a preferred embodiment.
FIG. 3 is a sectional view illustrating the structure of a duct and a rim of a marine propulsion device according to a preferred embodiment.
FIG. 4 is an enlarged view of a portion IV in FIG. 3.
FIG. 5 is a schematic view illustrating a relationship between the thickness of an entry suppressor and the width of a gap between the inner peripheral surface of a duct and the outer peripheral surface of a rim in the radial direction of a rotor of a marine propulsion device according to a preferred embodiment.

### DETAILED DESCRIPTION OF THE PREFERRED EMBODIMENTS

Preferred embodiments are hereinafter described with reference to the drawings.

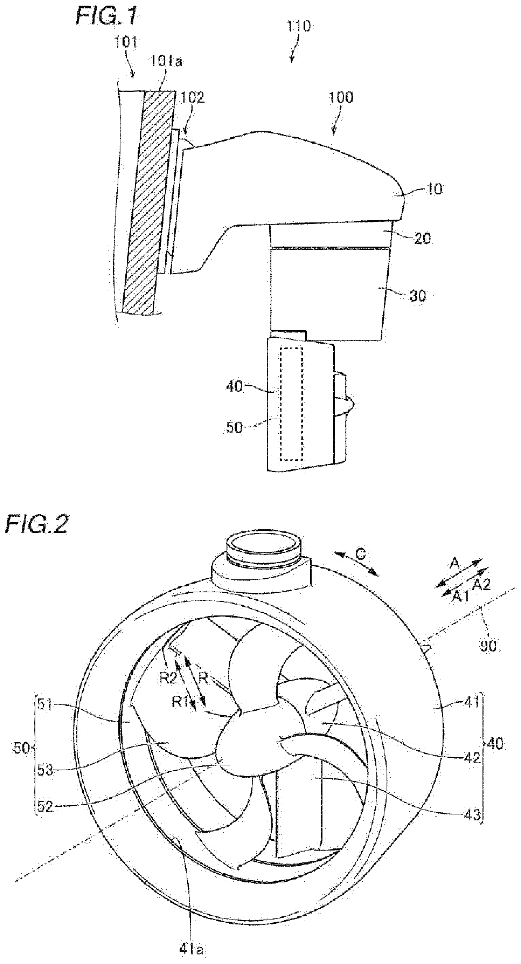

A marine propulsion device 100 and a marine vessel 110 according to preferred embodiments are now described with reference to FIGS. 1 to 5.

As shown in FIG. 1, the marine vessel 110 includes a hull 101, a bracket 102, and the marine propulsion device 100. The marine propulsion device 100 is attached to a stern 101a of the hull 101 via the bracket 102. That is, the marine propulsion device 100 is an outboard motor to propel the marine vessel 110. The marine vessel 110 may be a relatively small marine vessel used for sightseeing or fishing, for example.

The marine propulsion device 100 includes a cowling 10, an upper case 20, a lower case 30, a duct 40, and a propeller 50. The cowling 10, the upper case 20, the lower case 30, the duct 40, and the propeller 50 are aligned in this order from the top to the bottom of the marine propulsion device 100.

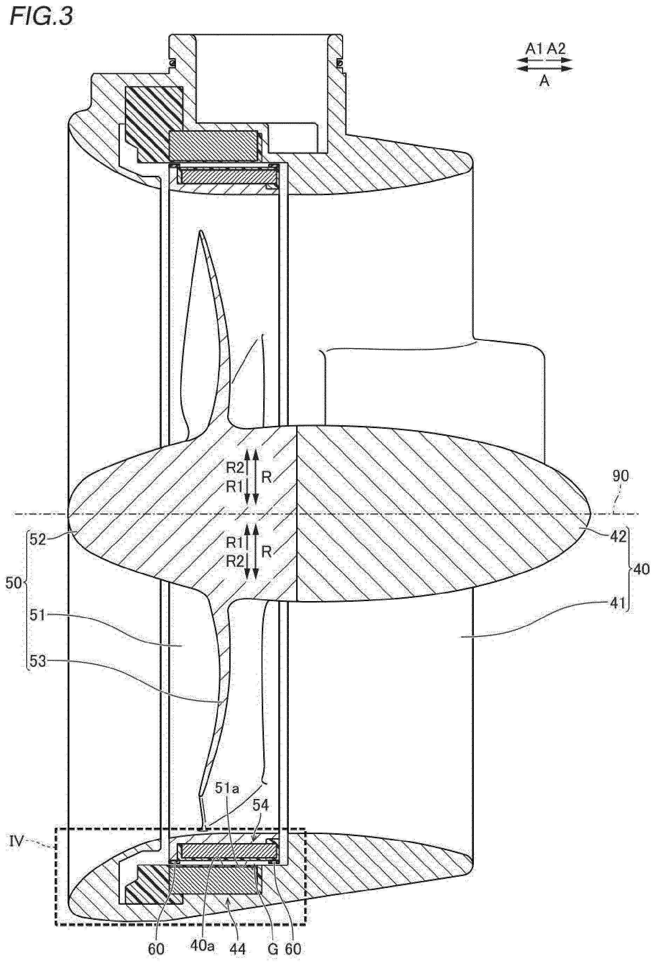

In the following description, the axial direction, radial direction, and circumferential direction of a rotor 54 (see FIG. 3) described below are defined as an A direction, an R direction, and a C direction, respectively. Furthermore, a first side (hull 101 side) and a second side (a side opposite to the hull 101 side) in the axial direction (A direction) of the rotor 54 are defined as an A1 side and an A2 side, respectively. Moreover, the radially inner side and the radially outer side of the rotor 54 are defined as an R1 side and an R2 side, respectively. The central axis 90 (see FIG. 2) of the propeller 50 extends along the A direction.

The cowling 10 is attached to the stern 101a of the hull 101 via the bracket 102. The cowling 10 and the upper case 20 are fixed to each other. The lower case 30 and the duct 40 are fixed to each other. The lower case 30 and the duct 40 are rotatable in the right-left direction of the marine propulsion device 100 with respect to the cowling 10 and the upper case 20. The lower case 30 and the duct 40 are rotated with respect to the cowling 10 and the upper case 20 such that the orientation of the propeller 50 with respect to the hull 101 is changed.

As shown in FIG. 2, the duct 40 includes a cylindrical duct ring 41, a duct hub 42 provided on the R1 side of the duct ring 41 and extending along the A direction, and a plurality of fins 43 extending in the R direction to connect the duct hub 42 to the duct ring 41.

The propeller 50 includes an annular rim 51, a propeller hub 52 provided on the R1 side of the rim 51 and extending along the A direction, and a plurality of blades 53 extending in the R direction to connect the propeller hub 52 to the rim 51. That is, the plurality of blades 53 are provided on the R1 side of the rim 51.

The propeller hub 52 is supported by the duct hub 42 so as to be rotatable in the C direction with respect to the duct hub 42. That is, the propeller 50 including the propeller hub 52 is rotatable in the C direction with respect to the duct 40 including the duct hub 42. Rotation of the propeller 50 generates a thrust to propel the marine vessel 110.

An annular recess 41a is provided on a surface of the duct ring 41 on the R1 side. The rim 51 of the propeller 50 is placed in the annular recess 41a.

As shown in FIG. 3, the duct ring 41 (duct 40) includes a stator 44. The rim 51 (propeller 50) includes the rotor 54. The rotor 54 is located on the R1 side of the stator 44 so as to face the stator 44. A motor that rotates the propeller 50 includes the stator 44 and the rotor 54. That is, the marine propulsion device 100 is an electric outboard motor.

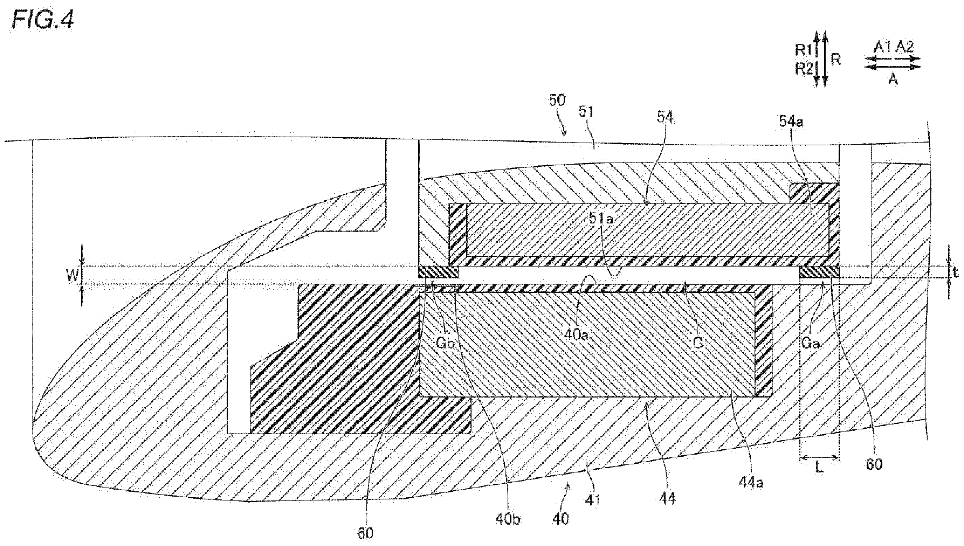

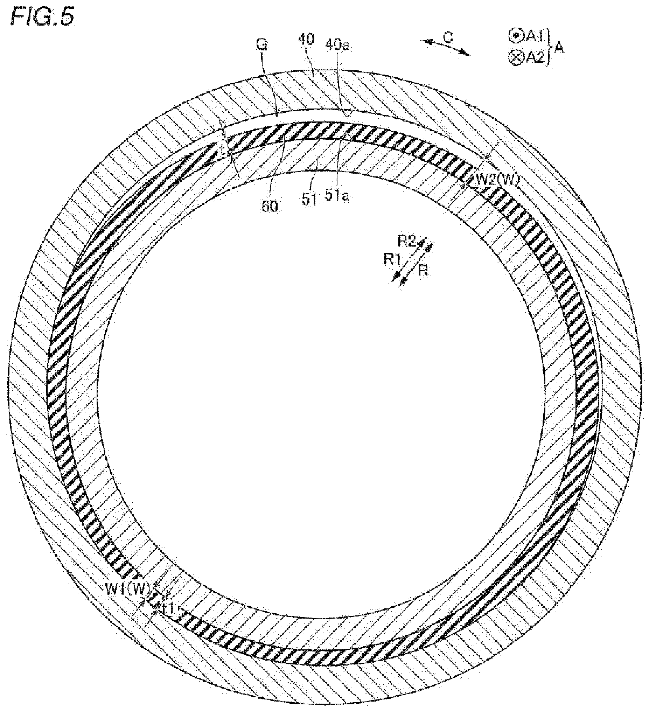

As shown in FIG. 4, a gap G is provided between the outer peripheral surface 51a of the rim 51 and the inner peripheral surface 40a of the duct 40 in the R direction. The gap G extends along the A direction. One end 54a (an end on the A2 side) of the rotor 54 in the A direction and one end 44a (an end on the A2 side) of the stator 44 in the A direction are deviated from each other in the A direction. As shown in FIG. 5, the gap G extends along the C direction.

As shown in FIG. 4, each of the rotor 54 and the stator 44 is covered with a resin. Thus, the gap G is defined by the outer peripheral surface 51a of the rim 51 made of the resin covering the rotor 54 and the inner peripheral surface 40a of the duct 40 made of the resin covering the stator 44. Each of the rotor 54 and the stator 44 is resin-molded.

As shown in FIG. 5, a width W (the width of the gap G) in the R direction between the outer peripheral surface 51a of the rim 51 made of the resin covering the rotor 54 and the inner peripheral surface 40a of the duct 40 made of the resin covering the stator 44 is non-uniform in the C direction. The width W in the R direction between the outer peripheral surface 51a of the rim 51 and the inner peripheral surface 40a of the duct 40 is non-uniform due to the accuracy of resin molding or the processing accuracy of the duct 40 and the rim 51 before resin molding, for example. That is, the gap G between the inner peripheral surface 40a of the duct 40 and the outer peripheral surface 51a of the rim 51 is non-uniform in the C direction due to manufacturing errors (tolerances) of the duct 40 and the rim 51.

As shown in FIG. 4, the marine propulsion device 100 includes entry suppressors 60 that reduce or prevent entry of foreign matter including gravel into the gap G between the inner peripheral surface 40a of the duct 40 and the outer peripheral surface 51a of the rim 51 in the R direction. As shown in FIG. 5, the entry suppressors 60 are provided circumferentially between the inner peripheral surface 40a of the duct 40 and the outer peripheral surface 51a of the rim 51 in the R direction.

The entry suppressors 60 are made of an expansible and shrinkable foamed rubber. That is, the entry suppressors 60 are made of an expansible and shrinkable material. Furthermore, the entry suppressors 60 are made of a non-magnetic material.

As shown in FIG. 4, the entry suppressors 60 made of the foamed rubber are attached to the outer peripheral surface 51a of the rim 51 in the gap G. The entry suppressors 60 are attached to the outer peripheral surface 51a of the rim 51 with an adhesive, for example. In the gap G, a wear suppressing layer 40b is provided on the inner peripheral surface 40a of the duct 40 facing the entry suppressors 60 made of the foamed rubber to reduce or prevent wear caused by foreign matter adhering to the foamed rubber. The wear suppressing layer 40b is a ceramic coating, for example.

The entry suppressors 60 are provided separately at a first end Ga (an end on the A2 side) and a second end Gb (an end on the A1 side) in the A direction of the gap G extending in the A direction, respectively. Thus, the entry suppressor 60 provided at the first end Ga (the end on the A2 side) of the gap G in the A direction is provided at a position corresponding, in the A direction, to one end 54a (the end on the A2 side) of the rotor 54 in the A direction and not corresponding, in the A direction, to one end 44a (the end on the A2 side) of the stator 44 in the A direction. The entry suppressor 60 provided at the first end Ga (the end on the A2 side) of the gap G in the A direction and the entry suppressor 60 provided at the second end Gb (the end on the A1 side) of the gap G in the A direction may be completely the same as each other or may be different from each other.

As shown in FIG. 5, in the R direction, the thickness t of the entry suppressor 60 made of the expansible and shrinkable material is larger than the minimum width W1 of the gap G and smaller than the maximum width W2 of the gap G. Therefore, in a portion of the gap G having the minimum width W1, the entry suppressors 60 are shrunk to a thickness t1 that is substantially the same as the minimum width W1 of the gap G. On the other hand, in the vicinity of a portion of the gap G having the maximum width W2, the entry suppressors 60 do not contact the inner peripheral surface 40a of the duct 40. The thicknesses t of the entry suppressors 60 refer to the thicknesses of the entry suppressors 60 in an unshrunk state.

In the R direction, a difference between the thicknesses t of the entry suppressors 60 made of the expansible and shrinkable material and the maximum width W2 of the gap G are smaller than the minimum width W1 of the gap G. In other words, in the R direction, the thicknesses t of the entry suppressors 60 made of the expansible and shrinkable material are larger than a difference between the maximum width W2 of the gap G and the minimum width W1 of the gap G. In such a case, in the R direction, the maximum particle size of foreign matter entering the gap G is smaller than the minimum width W1 of the gap G, and thus catching in the gap G of the foreign matter entering the gap G is reduced or prevented. As shown in FIG. 4, the lengths L of the entry suppressors 60 in the A direction are larger than the thicknesses t of the entry suppressors 60 in the R direction.

According to the various preferred embodiments described above, the following advantageous effects are achieved.

According to a preferred embodiment, in the R direction (the radial direction of the rotor 54), the thicknesses t of the entry suppressors 60 made of the expansible and shrinkable material are larger than the minimum width W1 of the gap G and smaller than the maximum width W2 of the gap G. Accordingly, in the portion of the gap G having the minimum width W1, the entry suppressors 60 are shrunk to the thickness t1 that is substantially the same as the minimum width W1 of the gap G, and contact the inner peripheral surface 40a of the duct 40. Furthermore, in the vicinity of the portion of the gap G having the maximum width W2, the entry suppressors 60 do not contact the inner peripheral surface 40a of the duct 40. Thus, the entry suppressors 60 contact the duct 40 only partially in the C direction (the circumferential direction of the rotor 54), and thus a frictional force generated between the entry suppressors 60 and the duct 40 when the rim 51 rotates is reduced as compared with a case in which the entry suppressors 60 contact the duct 40 over the entire circumference. Furthermore, each of the entry suppressors 60 in the marine propulsion device 100 according to the preferred embodiment having a thickness t larger than the minimum width W1 of the gap G and smaller than the maximum width W2 of the gap G and made of the expansible and shrinkable material has a simple structure as compared with an entry suppressor in a conventional marine propulsion device in which slits each having a width smaller than a gap between the inner peripheral surface of a duct and the outer peripheral surface of a rim are provided over the entire circumference. Consequently, entry of foreign matter into the gap G between the inner peripheral surface 40a of the duct 40 and the outer peripheral surface 51a of the rim 51 is reduced or prevented without providing entry suppressors each having a relatively complex structure, while an increase in the amount of power consumed to rotate the rim 51 and a decrease in the maximum output of the motor are reduced or prevented.

According to a preferred embodiment, in the R direction (the radial direction of the rotor 54), the difference between the thicknesses t of the entry suppressors 60 made of the expansible and shrinkable material and the maximum width W2 of the gap G is smaller than the minimum width W1 of the gap G. Accordingly, the maximum particle size of foreign matter entering the gap G is smaller than the minimum width W1 of the gap G, and thus catching in the gap G of the foreign matter entering the gap G is reduced or prevented. Thus, wear of the inner peripheral surface 40a of the duct 40 and the outer peripheral surface 51a of the rim 51 caused by the foreign matter entering the gap G is reduced or prevented.

According to a preferred embodiment, each of the rotor 54 and the stator 44 is covered with the resin. The entry suppressors 60 are provided between the outer peripheral surface 51a of the rim 51 made of the resin covering the rotor 54 and the inner peripheral surface 40a of the duct 40 made of the resin covering the stator 44 in the R direction (the radial direction of the rotor 54). Accordingly, entry of foreign matter into the gap G is reduced or prevented by the entry suppressors 60 such that wear of the inner peripheral surface 40a of the duct 40 and the outer peripheral surface 51a of the rim 51, both of which are made of the resin that wears more easily than metal, is effectively reduced or prevented.

According to a preferred embodiment, the width W (the width of the gap G) in the R direction (the radial direction of the rotor 54) between the outer peripheral surface 51a of the rim 51 made of the resin covering the rotor 54 and the inner peripheral surface 40a of the duct 40 made of the resin covering the stator 44 is non-uniform in the C direction (the circumferential direction of the rotor 54). Accordingly, assuming that the thicknesses t of the entry suppressors 60 in the R direction are constant, a structure in which the thicknesses t of the entry suppressors 60 are larger than the minimum width W1 of the gap G and smaller than the maximum width W2 of the gap G in the R direction is reliably achieved.

According to a preferred embodiment, the entry suppressors 60 are made of the expansible and shrinkable foamed rubber. Accordingly, the entry suppressors 60 are easily shrunk to be smaller than the minimum width W1 of the gap G.

According to a preferred embodiment, the entry suppressors 60 made of the foamed rubber is attached to the outer peripheral surface 51a of the rim 51 in the gap G. Accordingly, the entry suppressors 60 are easily provided in the gap G between the inner peripheral surface 40a of the duct 40 and the outer peripheral surface 51a of the rim 51. Furthermore, the wear suppressing layer 40b is provided on the inner peripheral surface 40a of the duct 40 facing the entry suppressors 60 made of the foamed rubber in the gap G to reduce or prevent wear caused by foreign matter adhering to the foamed rubber. Accordingly, when foreign matter adheres to the foamed rubber of which the entry suppressors 60 are made, the wear suppressing layer 40b reduces or prevents wear of the inner peripheral surface 40a of the duct 40 facing the entry suppressors 60 made of the foamed rubber, caused by the foreign matter.

According to a preferred embodiment, the entry suppressors 60 are attached to the outer peripheral surface 51a of the rim 51 in the gap G. Attachment work to attach the circumferentially provided entry suppressors 60 to the outer peripheral surface 51a of the rim 51 from the R2 side (the radial outside of the rotor 54) is easier than attachment work to attach the circumferentially provided entry suppressors 60 to the inner peripheral surface 40a of the duct 40 from the R1 side (the radial inside of the rotor 54). Therefore, as compared with a case in which the entry suppressors 60 are attached to the inner peripheral surface 40a of the duct 40 in the gap G, the entry suppressors 60 are easily provided in the gap G between the inner peripheral surface 40a of the duct 40 and the outer peripheral surface 51a of the rim 51. Furthermore, the entry suppressors 60 are placed on the upper side in the gap G on the lower side between the inner peripheral surface 40a of the duct 40 and the outer peripheral surface 51a of the rim 51, and thus catching in the entry suppressors 60 of foreign matter entering the gap G on the lower side between the inner peripheral surface 40a of the duct 40 and the outer peripheral surface 51a of the rim 51 is reduced or prevented when a state in which the duct 40 and the rim 51 are submerged in water has changed to a state in which the duct 40 and the rim 51 are not submerged in water.

According to a preferred embodiment, the entry suppressors 60 are made of the non-magnetic material. Accordingly, the magnetic influence of the entry suppressors 60 exercised on the rotor 54 when the rim 51 including the rotor 54 rotates is reduced or prevented. That is, a decrease in the performance of the motor including the stator 44 of the duct 40 and the rotor 54 of the rim 51 is reduced or prevented.

According to a preferred embodiment, the lengths L of the entry suppressors 60 in the A direction (the axial direction of the rotor 54) are larger than the thicknesses t of the entry suppressors 60 in the R direction (the radial direction of the rotor 54). Accordingly, the lengths L of the entry suppressors 60 in the A direction are relatively large, and thus the attachment areas of the entry suppressors 60 to the inner peripheral surface 40a of the duct 40 or the outer peripheral surface 51a of the rim 51 become relatively large. Thus, the entry suppressors 60 are relatively firmly attached to the inner peripheral surface 40a of the duct 40 or the outer peripheral surface 51a of the rim 51.

According to a preferred embodiment, the gap G extends in the A direction (the axial direction of the rotor 54). The entry suppressors 60 are provided separately at the first end Ga and the second end Gb in the A direction of the gap G extending in the A direction, respectively. Accordingly, as compared with a case in which the entry suppressors 60 are provided in portions of the gap G other than the first end Ga and the second end Gb in the A direction, entry of foreign matter into the gap G is effectively reduced or prevented. Furthermore, as compared with a case in which the entry suppressors 60 are provided in the portions of the gap G other than the first end Ga and the second end Gb in the A direction in addition to the first end Ga and the second end Gb of the gap G in the A direction, areas in which the entry suppressors 60 contact the rim 51 are reduced such that a frictional force generated between the entry suppressors 60 and the rim 51 when the rim 51 rotates is reduced.

According to a preferred embodiment, one end 54a of the rotor 54 in the A direction (the axial direction of the rotor 54) and one end 44a of the stator 44 in the A direction are deviated from each other in the A direction. The entry suppressor 60 provided at the first end Ga of the gap G in the A direction is provided at the position corresponding, in the A direction, to one end 54a of the rotor 54 in the A direction and not corresponding, in the A direction, to one end 44a of the stator 44 in the A direction. Accordingly, even when one end 54a of the rotor 54 in the A direction and one end 44a of the stator 44 in the A direction are deviated from each other in the A direction, the entry suppressor 60 is provided at the first end Ga in the A direction of the gap G extending in the A direction.

The preferred embodiments described above are illustrative for present teaching but the present teaching also relates to modifications of the preferred embodiments.

For example, while one end 54a of the rotor 54 in the A direction (the axial direction of the rotor 54) and one end 44a of the stator 44 in the A direction are preferably deviated from each other in the A direction, and the entry suppressor 60 provided at the first end Ga of the gap G in the A direction is preferably provided at the position corresponding, in the A direction, to one end 54a of the rotor 54 in the A direction and not corresponding, in the A direction, to one end 44a of the stator 44 in the A direction in preferred embodiments described above, the present teaching is not restricted to this. In the present teaching, one end of the rotor in the axial direction and one end of the stator in the axial direction may alternatively be located at the same position in the axial direction, and the entry suppressor provided at the first end of the gap in the axial direction may alternatively be provided at a position corresponding, in the axial direction, to one end of the rotor in the axial direction and one end of the stator in the axial direction.

While the gap G preferably extends in the A direction (the axial direction of the rotor 54), and the entry suppressors 60 are preferably provided separately at the first end Ga and the second end Gb in the A direction of the gap G extending in the A direction, respectively in preferred embodiments described above, the present teaching is not restricted to this. In the present teaching, the entry suppressors may alternatively be provided in positions other than the first end and the second end of the gap in the axial direction of the rotor in addition to the first end and the second end in the axial direction of the rotor of the gap extending in the axial direction of the rotor. Furthermore, the entry suppressor may alternatively be integrally provided from the first end to the second end in the axial direction of the rotor of the gap extending in the axial direction of the rotor. Moreover, the entry suppressor may not be provided at the first end in the axial direction of the rotor of the gap extending in the axial direction of the rotor or may not be provided at the second end in the axial direction of the rotor of the gap extending in the axial direction of the rotor.

While the lengths L of the entry suppressors 60 in the A direction (the axial direction of the rotor 54) are preferably larger than the thicknesses t of the entry suppressors 60 in the R direction (the radial direction of the rotor 54) in preferred embodiments described above, the present teaching is not restricted to this. In the present teaching, the lengths of the entry suppressors in the axial direction of the rotor may alternatively be equal to or less than the thicknesses of the entry suppressors in the radial direction of the rotor.

While the entry suppressors 60 are preferably made of the non-magnetic material in preferred embodiments described above, the present teaching is not restricted to this. In the present teaching, the entry suppressors may alternatively be made of a magnetic material.

While the entry suppressors 60 are preferably attached to the outer peripheral surface 51a of the rim 51 in the gap G in preferred embodiments described above, the present teaching is not restricted to this. In the present teaching, the entry suppressors 60 may alternatively be attached to the inner peripheral surface 40a of the duct 40 in the gap G.

While the entry suppressors 60 made of the foamed rubber are preferably attached to the outer peripheral surface 51a of the rim 51 in the gap G, and the wear suppressing layer 40b is preferably provided on the inner peripheral surface 40a of the duct 40 facing the entry suppressors 60 made of the foamed rubber in the gap G to reduce or prevent wear caused by foreign matter adhering to the foamed rubber in preferred embodiments described above, the present teaching is not restricted to this. In the present teaching, the entry suppressors made of the foamed rubber may alternatively be attached to the inner peripheral surface of the duct in the gap, and the wear suppressing layer may alternatively be provided on the outer peripheral surface of the rim facing the entry suppressors made of the foamed rubber in the gap to reduce or prevent wear caused by foreign matter adhering to the foamed rubber. Also in such a case, the entry suppressors are easily provided in the gap between the inner peripheral surface of the duct and the outer peripheral surface of the rim, similarly to the preferred embodiments described above. Furthermore, when foreign matter adheres to the foamed rubber of which the entry suppressors are made, the wear suppressing layer reduces or prevents wear of the outer peripheral surface of the rim facing the entry suppressors made of the foamed rubber, caused by the foreign matter.

While the entry suppressors are preferably made of the expansible and shrinkable foamed rubber in preferred embodiments described above, the present teaching is not restricted to this. In the present teaching, the entry suppressors may alternatively be made of an expansible and shrinkable material other than the foamed rubber (such as a rubber-based material other than foamed rubber).

While each of the rotor 54 and the stator 44 is preferably covered with the resin, and the entry suppressors 60 are preferably provided between the outer peripheral surface 51a of the rim 51 made of the resin covering the rotor 54 and the inner peripheral surface 40a of the duct 40 made of the resin covering the stator 44 in the R direction (the radial direction of the rotor 54) in preferred embodiments described above, the present teaching is not restricted to this. In the present teaching, the rotor and the stator may alternatively be covered with the resin and a member (metal, for example) other than the resin, respectively, and the entry suppressors may alternatively be provided between the outer peripheral surface of the rim made of the resin covering the rotor and the inner peripheral surface of the duct made of the member other than the resin covering the stator in the radial direction of the rotor. Furthermore, the rotor and the stator may alternatively be covered with a member other than the resin and the resin, respectively, and the entry suppressors may alternatively be provided between the outer peripheral surface of the rim made of the member other than the resin covering the rotor and the inner peripheral surface of the duct made of the resin covering the stator in the radial direction of the rotor. Moreover, each of the rotor and the stator may alternatively be covered with a member other than the resin, and the entry suppressors may alternatively be provided between the outer peripheral surface of the rim made of the member other than the resin covering the rotor and the inner peripheral surface of the duct made of the member other than the resin covering the stator in the radial direction of the rotor.

While the difference between the thicknesses t of the entry suppressors 60 made of the expansible and shrinkable material and the maximum width W2 of the gap G is preferably smaller than the minimum width W1 of the gap G in the R direction (the radial direction of the rotor 54) in preferred embodiments described above, the present teaching is not restricted to this. In the present teaching, the difference between the thicknesses of the entry suppressors made of the expansible and shrinkable material and the maximum width of the gap may alternatively be equal to or larger than the minimum width of the gap in the radial direction of the rotor.

## Claims

1. A marine propulsion device (100) comprising:
a duct (40) including a stator (44);
a propeller (50) including a rim (51) including a rotor (54) provided radially inwardly of the stator (44) so as to face the stator (44), and blades (53) provided radially inwardly of the rim (51); and
an entry suppressor (60) made of an expansible and shrinkable material, provided circumferentially between an inner peripheral surface (40a) of the duct (40) and an outer peripheral surface (51a) of the rim (51) in a radial direction of the rotor (54), and configured to reduce or prevent entry of foreign matter including gravel into a gap (G) between the inner peripheral surface (40a) of the duct (40) and the outer peripheral surface (51a) of the rim (51) in the radial direction; wherein
the entry suppressor (60) made of the expansible and shrinkable material has a thickness (t) larger than a minimum width (W1) of the gap (G) and smaller than a maximum width (W2) of the gap (G) in the radial direction.

2. A marine propulsion device (100) according to claim 1, wherein in the radial direction, a difference between the thickness (t) of the entry suppressor (60) made of the expansible and shrinkable material and the maximum width (W2) of the gap (G) is smaller than the minimum width (W1) of the gap (G).

3. A marine propulsion device (100) according to claim 1, wherein
each of the rotor (54) and the stator (44) is covered with a resin; and
the entry suppressor (60) is provided between the outer peripheral surface (51a) of the rim (51) made of the resin covering the rotor (54) and the inner peripheral surface (40a) of the duct (40) made of the resin covering the stator (44) in the radial direction.

4. A marine propulsion device (100) according to claim 3, wherein a width (W) in the radial direction between the outer peripheral surface (51a) of the rim (51) made of the resin covering the rotor (54) and the inner peripheral surface (40a) of the duct (40) made of the resin covering the stator (44) is non-uniform in a circumferential direction of the rotor (54).

5. A marine propulsion device (100) according to claim 1, wherein the entry suppressor (60) is made of an expansible and shrinkable foamed rubber.

6. A marine propulsion device (100) according to claim 5, wherein
the entry suppressor (60) made of the foamed rubber is configured to be attached to either the inner peripheral surface (40a) of the duct (40) or the outer peripheral surface (51a) of the rim (51) in the gap (G); and
the marine propulsion device (100) further comprises a wear suppressing layer (40b) provided on either the outer peripheral surface (51a) of the rim (51) or the inner peripheral surface (40a) of the duct (40) configured to face the entry suppressor (60) made of the foamed rubber in the gap (G) and configured to reduce or prevent wear caused by the foreign matter adhering to the foamed rubber.

7. A marine propulsion device (100) according to claim 1, wherein the entry suppressor (60) is configured to be attached to the outer peripheral surface (51a) of the rim (51) in the gap (G).

8. A marine propulsion device (100) according to claim 1, wherein the entry suppressor (60) is made of a non-magnetic material.

9. A marine propulsion device (100) according to claim 1, wherein the entry suppressor (60) is configured to be attached to either the inner peripheral surface (40a) of the duct (40) or the outer peripheral surface (51a) of the rim (51) in the gap (G).

10. A marine propulsion device (100) according to claim 9, wherein the entry suppressor (60) has a length (L) in an axial direction of the rotor (54) larger than the thickness (t) of the entry suppressor (60) in the radial direction.

11. A marine propulsion device (100) according to claim 1, wherein
the gap (G) is configured to extend in an axial direction of the rotor (54); and
the entry suppressor (60) is provided separately at each of a first end (Ga) and a second end (Gb) in the axial direction of the gap (G) configured to extend in the axial direction.

12. A marine propulsion device (100) according to claim 11, wherein
one end (54a) of the rotor (54) in the axial direction and one end (44a) of the stator (44) in the axial direction are configured to be deviated from each other in the axial direction; and
the entry suppressor (60) provided at the first end (Ga) of the gap (G) in the axial direction is provided at a position corresponding, in the axial direction, to the one end (54a) of the rotor (54) in the axial direction and not corresponding, in the axial direction, to the one end (44a) of the stator (44) in the axial direction.
